# EUROPÄISCHE PATENTSCHRIFT

(11) **EP 3 612 584 B1**
(45) Veröffentlichungstag und Bekanntmachung des Hinweises auf die Patenterteilung: **27.05.2020**
(21) Anmeldenummer: 17757479.5
(22) Anmeldetag: 04.08.2017
(51) Int. Cl.: C08G 77/08, C08L 83/04

(54) **STABILISIERUNG VON EDELMETALLKATALYSATOREN**
STABILIZATION OF NOBLE METAL CATALYSTS
STABILISATION DE CATALYSEURS À BASE DE MÉTAL NOBLE

(43) Veröffentlichungstag der Anmeldung: 26.02.2020
(73) Patentinhaber: Wacker Chemie AG, 81737 München (DE)
(72) Erfinder: KÖLLNBERGER, Andreas, 84375 Kirchdorf (DE); BAUER, Michael, 84561 Mehring (DE); PILZWEGER, Erich, 84387 Julbach (DE)
(74) Vertreter: Mieskes, Klaus Theoderich
(86) Internationale Anmeldenummer: PCT/EP2017/069788
(87) Internationale Veröffentlichungsnummer: WO 2019/025002

(56) Entgegenhaltungen:
- EP-A1- 0 602 638
- EP-A1- 1 215 247
- WO-A1-2013/096549
- WO-A1-2016/044732
- US-A- 4 414 376
- US-A1- 2014 135 416

## Beschreibung

Die vorliegende Erfindung betrifft eine neue Methode zur Stabilisierung von Edelmetallkatalysatoren. Insbesondere den Bereich thermisch oder durch ultraviolette und/oder sichtbarer Strahlung additionsvernetzender Siliconzusammensetzungen, deren Herstellung, ihre Verwendung in vernetzbaren Zusammensetzungen sowie daraus hergestellte Vernetzungsprodukte.

Im Allgemeinen erfolgt in additionsvernetzenden Siliconzusammensetzungen der Vernetzungsvorgang über eine Hydrosilylierungsreaktion, bei der als Katalysator üblicherweise Platin oder ein anderes Metall aus der Platingruppe eingesetzt wird. Bei der katalytisch ablaufenden Reaktion werden aliphatisch ungesättigte Gruppen mit Si-gebundenem Wasserstoff zur Reaktion gebracht, um die additionsvernetzbare Siliconzusammensetzung über den Aufbau eines Netzwerks in den elastomeren Zustand zu überführen.

### Stand der Technik

Im Stand der Technik sind strukturell vielfältige Katalysatoren bekannt. Sie werden üblicherweise entweder thermisch oder durch ultraviolette und/oder sichtbare Strahlung aktiviert. Besonders reaktive Systeme, welche üblicherweise Pt(0)-Komplexe, wie den sog. Karstedt-Katalysator, enthalten, sind bereits bei Raumtemperatur in der Lage, additionsvernetzende Silicone zu vernetzen. Auf Grund ihrer hohen Reaktivität sind diese Katalysatoren nur für zweikomponentige Systeme geeignet, bei denen die reaktiven Bestandteile erst kurz vor der Verarbeitung vermischt werden. Solche Systeme werden als RTV-2-Systeme bezeichnet.

Der Bedarf an einkomponentigen additionsvernetzenden Siliconkautschuksystemen, die idealerweise bei Raumtemperatur überhaupt nicht und bei erhöhter Temperatur oder bei der Einwirkung von ultravioletter und/oder sichtbarer Strahlung möglichst schnell aushärten, ist seit langer Zeit gegeben. Im Stand der Technik sind verschiedene Ansätze bekannt, das Problem der vorzeitigen Vernetzung bei Raumtemperatur zu lösen. Eine Möglichkeit besteht in der Verwendung von Inhibitoren, die der Mischung als Additive zugesetzt werden, um eine Verlängerung der Topfzeit zu bewirken. Sie werden immer im molaren Überschuss zur Katalysatorverbindung eingesetzt und hemmen dessen katalytische Aktivität. Mit zunehmender Inhibitormenge erfolgt jedoch neben einer Topfzeitverlängerung auch eine Abnahme der Reaktivität des Systems bei höheren Temperaturen und die Anspringtemperatur steigt an. Es gibt in der Literatur zahlreiche Beispiele für Inhibitoren aus verschiedenen Substanzklassen.

In US3723567 A werden aminofunktionelle Silane als Inhibitoren offenbart. Alkyldiamine in Verbindung mit einem acetylenisch ungesättigten Alkohol werden in US5270422 A zur Inhibierung verwendet. EP0761759 A2 beansprucht eine Kombination von Inhibitoren, es wird ein Phosphit zusammen mit einem weiteren Inhibitor wie beispielsweise Maleate und Ethinole verwendet. DE19757221 A1 beschreibt ebenfalls die Stoffklasse der Phosphite in der Verwendung eines Inhibitors. Phosphine werden in US4329275 A als Additiv zur Inhibierung beansprucht. Eine Kombination von Phosphiten in Verbindung mit organischen Peroxiden wird von EP1437382 A1 beschrieben. Neben negativen Einflüssen auf die Vernetzungskinetik erweist sich der Einsatz von zum Teil flüchtigen Inhibitoren oder Inhibitoren, die flüchtige Bestandteile freisetzen, ebenfalls als ungünstig. WO2016133946A1 benutzt mikroverkapselte Katalysatoren, um eine lange Lagerdauer zu erreichen. Der Nachteil dieser Methode ist, dass der ungewollte Eintrag von Scherenergie zur vorzeitigen Vernetzung der Massen führen kann.

EP0545591B1 beansprucht einen vorgeformten Platinkatalysator mit Platin in der Oxidationsstufe 0, der durch die Zugabe von Liganden zur Siliconmischung erreicht werden soll. Dieser wird mindestens äquimolar (1 - 60-fach) zugegeben um eine Topfzeit von 5 Tagen bei 50 °C zu erreichen. Die Existenz des Reaktionsprodukts zwischen dem Platinkatalysator und dem zugegebenen Liganden wurde in den Beispielen durch verschiedene analytische Methoden bewiesen. Der Unterschied dieser Methode und dem Einsatz diskreter chemischer Verbindungen besteht auch darin, dass bei der Reaktion von Ligand und Platinverbindung in einer Siliconmischung der vollständige Umsatz nicht garantiert werden kann und neben dem gewünschten Hauptprodukt diverse Nebenprodukte entstehen.

Mischungen, die eine völlige Inhibierung bei Raumtemperatur und die Nichtbeeinflussung der Reaktionsgeschwindigkeit bei Aushärtebedingungen durch einen entsprechenden Zusatzstoff aufweisen, sind bisher nicht bekannt.

Nach dem Stand der Technik erfolgt die Aktivierung der eingesetzten Katalysatoren normalerweise thermisch, d.h. die additionsvernetzbare Siliconzusammensetzung muss folglich für den Vernetzungsvorgang erwärmt werden. Gemäß dem Stand der Technik muss dabei die Siliconzusammensetzung häufig auf ein Substrat aufgebracht werden, wie dies zum Beispiel bei Beschichtungsvorgängen, bei ausgewählten Verguss-, Molding- und Co-Extrusions- oder sonstigen Formgebungsverfahren der Fall ist. Der eigentliche Vulkanisationsvorgang erfolgt in diesem Fall durch einen Erwärmungsprozess, für den oftmals kosten- und energieintensive Anlagen betrieben werden müssen.
Neben der thermischen Aktivierung von Katalysatoren sind auch solche, die durch Strahlung aktiviert werden, bekannt. In der Fachliteratur wird eine Vielzahl von Platinkomplexen beschrieben, die sich dazu eignen, durch Strahlung eine Hydrosilylierungsreaktion zu initiieren. Alle beschriebenen Platinkatalysatoren können durch Licht aktiviert werden und sind auch nach Abschalten der Lichtquelle dazu befähigt, Siliconzusammensetzungen zu vernetzen. Dieser Vorgang ist dem Fachmann als Dunkelreaktion bekannt.

In EP0122008 B1 werden UV-vernetzbare Siliconzusammensetzungen beschrieben, die als photosensitiven Katalysator einen (η-Diolefin) (σ-aryl)-Platinkomplexe enthalten. Als vorteilhaft wird eine hohe katalytische Aktivität angeführt. Nachteilig ist jedoch, dass diese Katalysatorklasse nur eine mäßige Dispergierbarkeit in der Siliconmatrix zeigt. Zudem bedarf es zur lichtinduzierten Zersetzung des Platinkatalysators der Verwendung von sehr kurzwelliger UV-C-Strahlung, was zwangsläufig zu einer hohen Ozonbelastung in der direkten Umgebung einer Fertigungsstraße führt.

EP0561919 B1 beschreibt ein Verfahren zur strahlenvernetzenden Hydrosilylierung, bei dem die Zusammensetzungen neben (η-Diolefin) (σ-aryl)-Platinkomplexen zusätzlich einen radikalischen Photoinitiator enthalten, der aktinische Strahlung absorbiert und auf diese Weise zu einer Erhöhung der Lichtausbeute beiträgt. Diese Kombination aus (η-Diolefin) (σ-aryl)-Platinkomplex und radikalischem Photoinitiator ermöglicht die Initiierung einer Hydrosilylierungsreaktion mit einem beschleunigten Vernetzungsvorgang. Allerdings muss die Verwendung einer zusätzlichen Verbindung grundsätzlich als nachteilig angesehen werden, da dies den Herstellprozess entsprechend aufwendiger gestaltet.

In EP0398701 B1 werden demgegenüber Pt(II)-β-diketonatkomplexe beansprucht, die den Vorteil einer langen Topfzeit in Verbindung mit einer kurzen Gelzeit bei Belichtung besitzen. Die relativ polaren Verbindungen zeigen jedoch den Nachteil einer schlechten Löslichkeit in der Siliconmatrix und eigenen sich daher nur bedingt für viele Anwendungen.

EP0146307 B1 offenbart (η⁵-Cyclopentadienyl)tri(σ-alkyl)Platin(IV)-Komplexe, die sich durch eine gute Löslichkeit in der Siliconmatrix auszeichnen. Mit den Komplexen können auch höher konzentrierte Lösungen realisiert werden. Ein wesentlicher Nachteil der Verbindungen ist jedoch ihr relativ hoher Dampfdruck und ihre Flüchtigkeit. Dadurch kann nicht ausgeschlossen werden, dass sich die Platinkonzentration ändert, wenn im Herstellungs- oder Verarbeitungsprozess des Siliconelastomers Vakuum angelegt wird. Eine weitere Folge daraus ist die nicht auszuschließende Kontamination der Raumluft mit toxikologisch bedenklichen Platinverbindungen.

In EP0358452 B1 werden den Zusammensetzungen, die als Katalysator (η⁵-Cyclopentadienyl)tri(σ-alkyl)Platin(IV)-Komplexe enthalten, Sensibilisierungsmittel zugesetzt, um die zur Vernetzung benötigte Wellenlänge des eingestrahlten Lichts zu längeren Wellenlängen hin zu verschieben. Der daraus resultierende Vorteil ist, dass die Mischungen mit sichtbarem Licht anstatt mit ultraviolettem Licht gehärtet werden können.

EP0561893 B1 beschreibt strahlenvernetzbare Zusammensetzungen, die neben (η⁵-Cyclopentadienyl)tri(σ-alkyl)Platin(IV)-Komplexen zusätzlich einen radikalischen Photoinitiator enthalten, die aktinische Strahlung absorbiert und auf diese Weise zu einer Erhöhung der Lichtausbeute beiträgt. Diese Kombination ermöglicht eine Erhöhung der Quantenausbeute für die eingesetzten Mischungen. Als Nachteilig muss die dadurch erhöhte Dunkelreaktivität angesehen werden. Zudem werden durch die Verwendung einer zusätzlichen Verbindung sowohl Herstellungsprozess verteuert als auch die Materialkosten erhöht.

EP1803728 A1 offenbart modifizierte (n⁵-Cyclopentadienyl)tri(σ-alkyl)Platin(IV)-Komplexe, die am Cyclopentadienylring spezielle Substituenten (Naphtyl, Anthracenyl, etc.) tragen, um die Quantenausbeute zu erhöhen und um die zur Aktivierung benötigte Lichtwellenlänge ins langwellig zu verschieben. Die Anbindung von aromatischen Ringen wirkt sich jedoch nachteilig auf die Löslichkeit der Komplexe in der Siliconmatrix aus. Auch diese Verbindungen weisen den Nachteil der Flüchtigkeit auf.

Diskrete chemische Verbindungen, welche durch die Wahl der Liganden am Zentralatom bereits in der Synthese stabilisiert werden, sind beispielsweise Komplexe, welche σ-Alkyl-Edelmetallbindungen enthalten wie in EP0994159B1, EP0146307B1 oder in WO2009092762, bei denen dem Zentralatom die Oxidationszahlen +II und +IV zugeordnet werden können.

### Aufgabe der Erfindung

Aufgabe der vorliegenden Erfindung war daher die Bereitstellung, bei Raumtemperatur stabiler Siliconzusammensetzungen, insbesondere einkomponentiger Siliconzusammensetzungen, die den Nachteil einer verlangsamten Reaktions- oder Vernetzungsgeschwindigkeit wie bei der Verwendung von Inhibitoren oder insitu gebildeten Platinverbindungen nicht zeigen. Zudem sollen diese Zusammensetzungen nach thermischer oder strahlungsinduzierter Aktivierung weiterhin eine schnelle Polymerisation ermöglichen.

Überaschenderweise konnte diese Aufgabe durch die erfindungsgemäßen Siliconzusammensetzungen gelöst werden.

Eine erste Ausführungsform des Gegenstandes dieser Anmeldung sind additionsvernetzende Siliconzusammensetzungen, ausgewählt aus der Gruppe enthaltend
- jeweils mindestens eine Verbindung (A), (B), (D) und (E),
- jeweils mindestens eine Verbindung (C), (D), und (E) und
- jeweils mindestens eine Verbindung (A), (B), (C), (D) und (E)
   wobei
   (A) eine organische Verbindung oder eine Siliziumorganische Verbindung, enthaltend mindestens zwei Reste mit aliphatischen Kohlenstoff-Kohlenstoff-Mehrfachbindungen,
   (B) ein Siliziumorganische Verbindung, enthaltend mindestens zwei Si-gebundene Wasserstoffatome,
   (C) eine Siliziumorganische Verbindung, enthaltend SiC-gebundene Reste mit aliphatischen Kohlenstoff-Kohlenstoff-Mehrfachbindungen und Si- gebundene Wasserstoffatome,
   (D) ein Edelmetallkatalysator, wobei das Edelmetall in einer Oxidationsstufe von größer 0 vorliegt, und
   (E) einen mindestens zweizähnigen Chelatliganden bedeutet,
mit der Maßgabe, dass die Verbindung (D) und (E) vorab gemischt wurden, oder die Verbindung (E) gleichzeitig mit Verbindung (D) in die Zusammensetzung eingemischt wird, und
mit der Maßgabe, dass die Verbindung (E) in der Siliconzusammensetzung verbleibt.

Eine zweite Ausführungsform des Gegenstandes dieser Erfindung sind additionsvernetzende Siliconzusammensetzungen, ausgewählt aus der Gruppe enthaltend
- jeweils mindestens eine Verbindung (A), (B), (D) und (E),
- jeweils mindestens eine Verbindung (C), (D), und (E) und
- jeweils mindestens eine Verbindung (A), (B), (C), (D) und (E)
   wobei
   (A) eine organische Verbindung oder eine Siliziumorganische Verbindung, enthaltend mindestens zwei Reste mit aliphatischen Kohlenstoff-Kohlenstoff-Mehrfachbindungen,
   (B) ein Siliziumorganische Verbindung, enthaltend mindestens zwei Si-gebundene Wasserstoffatome,
   (C) eine Siliziumorganische Verbindung, enthaltend SiC-gebundene Reste mit aliphatischen Kohlenstoff-Kohlenstoff-Mehrfachbindungen und Si- gebundene Wasserstoffatome,
   (D) ein Edelmetallkatalysator, wobei das Edelmetall in einer Oxidationsstufe von größer 0 vorliegt, und
   (E) einen mindestens zweizähnigen Chelatliganden bedeutet,
mit der Maßgabe, dass die Verbindung (D) und (E) vorab gemischt wurden, und
mit der Maßgabe, dass die Verbindung (E) nach der Behandlung und vor dem Vermischen mit den anderen Verbindungen wieder entfernt wurde.

Bei der Herstellung dieser erfindungsgemäßen Zusammensetzungen, erfolgt eine Zugabe starker, mehrzähniger Liganden (E) entweder a) bei der Katalysatorherstellung oder b) bei der Formulierung der erfindungsgemäßen, bevorzugt einkomponentigen Siliconzusammensetzungen. Das Wirkprinzip dieser Liganden entspricht dabei nicht dem eines Inhibitors, wie im Stand der Technik bekannt, sondern dem eines "Scavenger" also eine Art Fänger. Die chemische Bindung des Scavenger-Liganden mit bestimmten Katalysatorspezies ist bei Raumtemperatur so stark, dass die Verbindung nicht mehr in der Lage ist, die Vernetzungsreaktion von Siliconen zu katalysieren. Es zeigt sich überraschenderweise, dass in den erfindungsgemäßen Zusammensetzungen der Scavenger (E) wahrscheinlich nicht mit dem für die platinkatalysierte Hydrosilylierung eingesetzten Katalysator (D) reagiert, sondern selektiv nur mit dessen Neben- oder Abbauprodukten, die entweder während der Katalysatorsynthese nicht abgetrennt werden (können) oder sich im Laufe der Lagerung durch langsamen Abbau des eingesetzten Katalysators (D) bilden. Im Normalfall genügt es deshalb, diese Scavenger (E) bezüglich der funktionellen Gruppen unterstöchiometrisch bezogen auf das Edelmetall aus (D) einzusetzen. Die verwendeten Edelmetallkatalysatoren (D) haben dabei eine intrinsische thermische Stabilität, so dass der Abbau oder der Zerfall bei Raumtemperatur nicht oder nur sehr langsam stattfindet. Erst bei erhöhter Temperatur und/oder durch Bestrahlung mit sichtbarer oder ultravioletter Strahlung wird der Großteil der zugesetzten Edelmetallkatalysatoren (D) aktiviert und die Hydrosilylierung kann ablaufen. Bevorzugt als (E) sind solche Scavenger, welche die Reaktionsgeschwindigkeit nicht wesentlich beeinflussen.

Im Rahmen der vorliegenden Erfindung werden als Organopolysiloxane sowohl polymere, oligomere wie auch dimere Siloxane verstanden.

Die in den erfindungsgemäßen Siliconzusammensetzungen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist. Auch sind Mischungen aus (A) und (B) und (C), mit den oben genannten Verhältnissen von aliphatisch ungesättigten Resten und Si-gebundenen Wasserstoffatomen, möglich.

### Verbindung (A)

Bei der erfindungsgemäß eingesetzten Verbindung (A) kann es sich um siliciumfreie, organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisoproppenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die erfindungsgemäßen Siliconzusammensetzungen als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel (I)

RₐR⁴_{b}SiO_{(4-a-b)/2} (I)

eingesetzt, wobei
**R** unabhängig voneinander, gleich oder verschieden, ein von aliphatischen Kohlenstoff-Kohlenstoff-Mehrfachbindungen freien, organischen oder anorganischen Rest,
**R⁴** unabhängig voneinander, gleich oder verschieden einen einwertigen, substituierten oder nicht substituierten, SiC-gebundenen Kohlenwasserstoffrest mit mindestens einer aliphatischen Kohlenstoff-Kohlenstoff-Mehrfachbindung,
**a** 0, 1, 2 oder 3 ist, und
**b** 0, 1 oder 2 ist
bedeutet,
mit der Maßgabe, dass die Summe a + b kleiner oder gleich 3 ist und mindestens 2 Reste R⁴ je Molekül vorliegen.

Bei Rest R kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der Formel (I) miteinander verbinden.

Weitere Beispiele für R sind die einwertigen Reste -F, -Cl, - Br, OR⁵, -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste. Falls es sich bei Rest R um SiC-gebundene, substituierte Kohlenwasserstoffreste handelt, sind bevorzugte Substituenten Halogenatome, phosphorhaltige Reste, Cyanoreste, -OR⁵, -NR⁵-, -NR⁵₂, -NR⁵-C(O)-NR⁵₂, -C(O)-NR⁵₂, -C(O)R⁵, -C(O)OR⁵, -SO₂-Ph und -C₆F₅. Dabei bedeutet R⁵ unabhängig voneinander, gleich oder verschieden ein Wasserstoffatom oder einen einwertigen Kohlenwasserstoffrest mit 1 bis 20 Kohlenstoffatomen und Ph gleich Phenylrest.

Beispiele für Reste R sind Alkylreste, wie der Methyl-, Ethyl-, n-Propyl-, iso-Propyl-, n-Butyl-, iso-Bulyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)-N(R⁵)C(O)NR⁵₂, -(CH₂)ₙ-C(O)NR⁵₂, -(CH₂)ₙ-C(O)R⁵, -(CH₂)ₙ-C(O)OR⁵,-(CH₂)ₙ-C(O)NR⁵₂, - (CH₂) -C(O) - (CH₂)ₘC(O)CH₃, -(CH₂)-O-CO-R⁵, - (CH₂)-NR⁵-(CH₂)ₘ-NR⁵2, -(CH₂)ₙ-O-(CH₂)ₘCH(OH)CH₂OH,-(CH₂)ₙ(C)CH₂CH₂)ₘOR⁵, -(CH₂)ₙ-SO₂-Ph und -(CH₂)ₙ-O-C₆F₅, wobei R⁵ und Ph der oben dafür angegebene Bedeutung entspricht und n und m gleiche oder verschiedene ganze Zahlen zwischen 0 und 10 bedeuten.

Beispiele für R gleich zweiwertige, beidseitig gemäß Formel (I) Si-gebundene Reste sind solche, die sich von den voranstehend für Rest R genannten einwertigen Beispiele dadurch ableiten, dass eine zusätzliche Bindung durch Substitution eines Wasserstoffatoms erfolgt, Beispiele für derartige Reste sind -(CH₂)-, -CH(CH₃)-, -C(CH₃)₂-, -CH(CH₃)-CH₂-, -C₆H₄-, -CH(Ph)-CH₂-,-C(CF₃)₂-, -(CH₂₎ₙ-C₆H₄-(CH₂)ₙ-, -(CH₂)ₙ-C₆H₄-C₆H₄-(CH₂)ₙ-, -(CH₂O)ₘ, (CH₂CH₂O)ₘ, -(CH₂)ₙ-Oₓ-C₆H₄-SO₂-C₆H₄-Oₓ-(CH₂)ₙ-, wobei x 0 oder 1 ist, und Ph, m und n die voranstehend genannte Bedeutung haben.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R⁴ kann es sich um beliebige, einer Anlagerungsreaktion (Hydrosilylierung) mit einer SiH-funktionellen Verbindung zugängliche Gruppen handeln.
Falls es sich bei Rest R⁴ um SiC-gebundene, substituierte Kohlenwasserstoffreste handelt, sind als Substituenten Halogenatome, Cyanoreste und -OR⁵ bevorzugt, wobei R⁵ die obengenannte Bedeutung hat.

Bevorzugt handelt es sich bei Rest R⁴ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R⁴R₂SiO_{1/2}, R⁴RSiO_{1/2} und R₂SiO_{2/2} zusammengesetzt, wobei R und R⁴ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R⁴SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Verbindung (A) ist die Verwendung vinylfunktioneller, im wesentlichen linearer Polydiorganosiloxane mit einer Viskosität von 0,01 bis 500 000 Pa•s, besonders bevorzugt von 0,1 bis 100 000 Pa•s, jeweils bei 25°C und einer Scherrate von 1 sec⁻¹.

Die Viskositäten im vorliegenden Text werden gemäß DIN EN ISO 3219: 1994 (Polymere/ Harze in flüssigem, emulgiertem oder dispergiertem Zustand) und DIN 53019 bestimmt. Die Messung von Viskositäten und Fließkurven bei 25°C können beispielsweise mit Rotationsviskosimetern wie einem Rotationsrheometer mit Luftlagerung von Anton Paar MCR301 mit Platte-/Kegelsystemen oder vergleichbaren Geräten bestimmt werden.

### Verbindung (B)

Als Organosiliciumverbindung (B) können alle hydrogenfunktionellen Organosiliciumverbindungen eingesetzt werden, die auch bisher in additionsvernetzbaren Zusammensetzungen eingesetzt worden sind.
Als Organopolysiloxane (B), die Si-gebundene Wasserstoffatome aufweisen, werden vorzugsweise lineare, cyclische oder verzweigte Organopolysiloxane aus Einheiten der allgemeinen Formel (II)

R_{c}H_{d}SiO_{(4-c-d)/2} (II)

eingesetzt, wobei
R die oben angegebene Bedeutung hat,
c 0, 1, 2 oder 3 ist und
d 0, 1 oder 2 ist,
mit der Maßgabe, dass die Summe von c + d kleiner oder gleich 3 ist und mindestens zwei Si gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung hat. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind, wobei R die vorstehend angegebene Bedeutung hat.

Selbstverständlich können auch Mischungen unterschiedlicher, den Kriterien des Bestandteils (B) genügender Siloxane eingesetzt werden. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 10 000 mPa•s und einer Scherrate von 1 sec⁻¹, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Siliconzusammensetzungen enthalten, dass das Molverhältnis von SiH-Gruppen zu aliphatisch ungesättigten Gruppen aus (A) bei 0,1 bis 20, besonders bevorzugt zwischen 1,0 und 5,0, liegt.
Die erfindungsgemäß eingesetzten Verbindungen (A) und (B) sind handelsübliche Produkte bzw. nach in der Chemie gängigen Verfahren herstellbar.

Anstelle von Verbindung (A) und (B) können die erfindungsgemäßen Siliconzusammensetzungen Organopolysiloxane (C), die gleichzeitig aliphatische Kohlenstoff-Kohlenstoff-Mehrfachbindungen und Si-gebundene Wasserstoffatome aufweisen, enthalten. Auch können die erfindungsgemäßen Siliconzusammensetzungen alle drei Verbindungen (A), (B) und (C) enthalten.

### Verbindung (C)

Falls Siloxane (C) eingesetzt werden, handelt es sich vorzugsweise um solche aus Einheiten der allgemeinen Formeln (III), (IV) und (V)

R_{f}SiO_{4/2} (III)

R_{g}R⁴SiO_{3-g/2} (IV)

RₕHSiO_{3-h/2} (V)

wobei
R und R⁴ die oben dafür angegebene Bedeutung haben
f 0, 1, 2 oder 3 ist,
g 0, 1 oder 2 ist und
h 0, 1 oder 2 ist,
mit der Maßgabe, dass je Molekül mindestens 2 Reste R⁴ und mindestens 2 Si-gebundene Wasserstoffatome vorliegen.

Beispiele für Organopolysiloxane (C) sind solche aus SO_{4/2}, R₃SiO_{1/2}-, R₂R⁴SiO_{1/2}- und R₂HSiO_{1/2}- Einheiten, sogenannte MP-Harze, wobei diese Harze zusätzlich RSiO_{3/2}- und R₂SiO-Einheiten enthalten können, sowie lineare Organopolysiloxane im Wesentlichen bestehend aus R₂R⁴SiO_{1/2}-, R₂SiO- und RHSiO-Einheiten mit R und R⁴ gleich der obengenannten Bedeutung.

Die Organopolysiloxane (C) besitzen vorzugsweise eine durchschnittliche Viskosität von 0,01 bis 500 000 Pa•s, besonders bevorzugt 0,1 bis 100 000 Pa•s jeweils bei 25°C und einer Scherrate von 1 sec⁻¹.
Organopolysiloxane (C) sind nach in der Chemie gängigen Methoden herstellbar.

### Verbindung (D)

Verbindung (D) sind Edelmetallkatalysatoren, wobei das Edelmetall in einer Oxidationsstufe von größer 0 vorliegt. Dies ist notwendig, da sich überraschenderweise herausgestellt hat, dass nur dann die Verbindung (E) als Scavenger wirkt und katalytisch aktive Neben- bzw. Abbauprodukte abfängt, dadurch deren katalytische Wirkung blockiert und damit sehr lange Topfzeiten der erfindungsgemäßen Siliconzusammensetzungen ermöglicht.

Bei Edelmetallkatalysatoren (D) der Platingruppe wie Pt und Pd liegt Pt und Pd vorzugsweise in den Oxidationsstufen +II und +IV vor. Bei Edelmetallkatalysatoren (D) der Iridiumgruppe wie Ir und Rh liegt Ir und Rh vorzugsweise in den Oxidationsstufen +I und +III vor.

Beispiele für geeignete Platinverbindungen als Verbindung (D) sind:
Pt(II)-β-diketonatkomplexe, (η-Diolefin)(σ-aryl)-Platinkomplexe, (η-Diolefin)(σ-alkyl)-Platinkomplexe (η5-Cyclopentadienyl)tri(σ-alkyl)Platin(IV)-Komplexe, Bis-acetylacetonato-Pt(II)-Komplexe, Bis-phosphine-Platin(II)dihalogenidkomplexe, Bis(σ-alkinyl)(1,5-cyclooctadien)platin(II) komplexe.
Die Seitengruppen der oben genannten Komplexe können in weiten Grenzen variieren. Ausschlaggebend ist lediglich die direkte Umgebung des Zentralmetalls.

Konkrete geeignete Beispiele für Verbindung (D) sind: Bis(acetylacetonato)Pt(II), Bis(σ-tertbutylethinyl)-cyclooctadien-Pt(II), Bis(σ-tert-butylphenyl)-cyclooctadien-Pt(II), Bis(σ-1-ethinyl-1-cyclohexanol)-cyclooctadien-Pt(II), Trimethyl[(allyldimethylsilyl)cyclopentadienyl] -platin(IV), Trimethyl[((2-methyl-allyl)dimethylsilyl)cyclopentadienyl] - platin(IV), Trimethyl[(trimethoxysilyl)methyl-(allyldimethylsilyl)cyclopentadienyl] -platin(IV), Trimethyl[(2-trimethoxysilyl)ethyl-(allyldimethylsilyl)cyclo pentadienyl]-platin(IV), Trimethyl[(3-trimethoxysilyl)propyl-(allyldimethylsilyl)cyclopentadienyl] -platin(IV), Trimethyl[(3-dimethoxymethylsilyl)propyl-(allyldimethylsilyl) cyclopentadienyl]-platin(IV), Trimethyl[(4-trimethoxysilyl)butyl-(allyldimethylsilyl)cyclopentadienyl]-platin(IV), Trimethyl[(2-trimethoxysilyl)-1-methyl-ethyl-(allyldimethylsilyl)cyclopentadienyl]-platin(IV), Trimethyl[(3-trimethoxysilyl)-2-methyl-2-propyl-(allyldimethylsilyl)cyclopentadienyl]-platin(IV), Trimethyl[bis(allyldimethylsilyl)cyclopentadienyl]-platin( IV), Trimethyl[bis(2-methyl-allyldimethylsilyl)cyclopentadienyl]-platin(IV), Trimethyl[(3-dimethoxymethylsilyl)propyl-(tert-butyl) cyclopentadienyl]-platin(IV), Trimethyl[(trimethoxysilyl)methyl-bis(allyldimethylsilyl)cyclopentadienyl] -platin(IV), Trimethyl[(2-trimethoxysilyl)ethyl-bis(allyldimethylsilyl) cyclopentadienyl]-platin(IV), Trimethyl[(3-trimethoxysilyl)propyl-bis(allyldimethylsilyl)-cyclopentadienyl]-platin(IV), Trimethyl[(4-trimethoxysilyl)butyl- bis(allyldimethylsilyl)-cyclopentadienyl]-platin(IV), Trimethyl[(2-trimethoxysilyl)-1-methyl-ethyl-bis(allyldimethylsilyl) cyclopentadienyl]-platin(IV), Trimethyl[(3-trimethoxysilyl)-2-methyl-2-propyl-bis(allyldimethylsilyl)cyclopentadienyl]-platin(IV), Trimethyl[tris(allyldimethylsilyl)cyclopentadienyl]-pla tin(IV), Trimethyl[(triethoxysilyl)methyl-(allyldimethylsilyl)cyclopentadienyl]-platin(IV), Trimethyl[(triacetoxysilyl)methyl-(allyldimethylsilyl)cyclopentadienyl]-platin(IV), Trimethyl[(3-bis-trimethylsiloxy)methylsilylpropyl] (allyldimethylsilyl) cyclopentadienyl-platin(IV), Trimethyl[(3-triethoxysilyl)propyl-(allyldimethylsilyl)cyclopentadienyl]-platin(IV), Trimethyl[(triethoxysilyl)methyl-bis(allyldimethylsilyl)cyclopentadienyl]-platin(IV), Trimethyl[(3-triethoxysilyl)propyl-bis(allyldimethylsilyl)-cyclopentadienyl]-platin(IV), Trimethyl[(triethoxysilyl)methyl-tris(allyldimethylsilyl)cyclopentadienyl]-platin(IV), Triethyl[(allyldimethylsilyl)cyclopentadienyl]-platin(IV), Tris(trimethylsilylmethyl) [(allyldimethylsilyl)cyclopentadienyl ]-platin(IV), Triethyl[(trimethoxysilyl)methyl-(allyldimethylsilyl)cyclopentadienyl]-platin(IV), Triethyl[(trimethoxysilyl)methyl-bis(allyldimethylsilyl)cyclopentadienyl]-platin(IV), Triethyl[tris(allyldimethylsilyl)cyclopentadienyl]-platin(IV) und Triethyl[(trimethoxysilyl)methyl-tris(allyldimethylsilyl)cyclopentadienyl]-platin(IV).

Bevorzugt handelt es sich bei der erfindungsgemäßen Verbindung (D) um Trimethyl[(allyldimethylsilyl)cyclopentadienyl]-platin(IV), Trimethyl[bis(allyldimethylsilyl)cyclopentadienyl]-platin( IV), Trimethyl[(3-dimethoxymethylsilyl)propyl-(allyldimethylsilyl) cyclopentadienyl]-platin(IV), Trimethyl[(3-trimethoxysilyl)propyl-bis(allyldimethylsilyl)-cyclopentadienyl]-platin(IV) und Trimethyl[(3-trimethoxysilyl)propyl-(allyldimethylsilyl)cyclopentadienyl]-platin(IV), Trimethyl[(3-dimethoxymethylsilyl)propyl)cyclopentadienyl]-platin(IV), (1R,2R)-Cyclohexanediamine(1,2-ethanedionato)platinum(II).

Besonders bevorzugt handelt es sich bei der erfindungsgemäßen Verbindung (D) um Trimethyl[(allyldimethylsilyl)cyclopentadienyl]-platin(IV), Trimethyl[(3-dimethoxymethylsilyl)propyl-(allyldimethylsilyl) cyclopentadienyl]-platin(IV) und Trimethyl[(3-trimethoxysilyl)propyl-(allyldimethylsilyl)cyclopentadienyl]-platin(IV), Trimethyl[(allyldimethylsilyl)cyclopentadienyl]-platin(IV), Trimethyl[(3-dimethoxymethylsilyl)propyl)cyclopentadienyl]-platin(IV)
sowie deren Reaktionsprodukte mit OH-terminierten Polydialkylsiloxanolaten (polymergebundene Varianten), bei denen die Methoxygruppen ganz oder teilweise durch OH-terminierte Polydimethylsiloxane mit Kettenlängen zwischen 10 und 1000 ersetzt wurden, Bis(o-ethinylbenzol)-Pt(II)cyclooctadiene, Bis(σ-tert-butylphenyl)-Pt(II)cyclooctadien.

### Verbindung (E)

Von entscheidender Bedeutung für die Topfzeit der erfindungsgemäßen Siliconzusammensetzungen ist Verbindung (E). Sie ist ein einzelner oder eine Mischung verschiedener mindestens zweizähniger Liganden, welche in der Lage sind, an Edelmetalle wie Pt, Pd, Ir und Rh mit einer Oxidationsstufe größer 0 zu binden.

Verbindung (E) ist eine organische Verbindung, welche mindestens zwei Heteroatome enthält, die an Edelmetall binden können. Dem Stand der Technik sind als starke Liganden, welche an Edelmetall in allen Oxidationsstufen binden, verschiedene Verbindungsklassen bekannt, die Stickstoff-, Schwefel-, Sauerstoff- oder Phosphoratome enthalten.

Beispiele für Verbindung (E) sind Azodicarboxylate, Triazolindione, heteroaromatische Stickstoffverbindungen, Diphos-Liganden oder Pincer-Liganden. Dabei spielt es keine Rolle für den Effekt, ob die Substanzen als Molekül oder angebunden an einen Träger wie Kieselsäure oder an ein Polymer sind.

Bei einer Ausführungsform der vorliegenden Erfindung erfolgt eine Art Vorbehandlung der Verbindung (D) mit der Verbindung (E), wobei die Verbindung (E) nach der Behandlung und vor dem Vermischen mit den anderen Verbindungen zur erfindungsgemäßen Silikonzusammensetzung wieder entfernt wird. Eine Möglichkeit dieser Vorbehandlung besteht darin Verbindungen (E) die an einen Träger wie Kieselsäure oder Polymere angebunden sind mit (D) zu vermischen und danach durch Filtration wieder zu entfernen.

Beispiele für schwefelhaltige Verbindungen (E) sind: Dimercaprol, Dimercaptobernsteinsäure, Dimercaptopropansulfonsäure oder Tiopronin.
Beispiele für sauerstoffhaltige Verbindung (E) sind: Brenzcatechin, Acetylacetonat oder Weinsäure.

Beispiele für phosphorhaltige Verbindung (E) sind: Bis(diphenylphosphino)methan, BINAP, 1,2-Bis(diphenylphosphino)ethan, 1,3-Bis(diphenylphosphino)propan, Chiraphos oder DIPAMP.

Beispiele für Verbindung (E) mit stickstoffhaltigen, zum Teil mit heteroaromatischen Strukturen, welche zusätzlich substituiert sein können, sind: Porphyrine, 4-Hydroxypyridin-2,6-dicarbonsäure, 2,2'-Bipyridin, 1,10-Phenanthrolin, Neocuproin, Biquinoline, Terpyridine, Bipyrazin, Phthalazine, Quinolin-2-ylmethanthiol, 4,4'-Dipyridin, 3,3'-Dipyridin, 2,4'-Dipyridin, Indazol, Dipyridylketon, Poly-4-vinylpyridin, Poly-2-vinylpyridin, 2,2':6',2"-Terpyridine oder 4,4'-Trimethylendipyridin, Azodicarbonsäurediethylester, Azodicarbonsäurediisopropylester oder 4-Phenyl-1,2,4-triazolin-3,5-dion.
Dabei können die Wasserstoffatome der genannten Verbindungen durch Aklyl-, Aryl-, Arylalkyl-, oder Heteroatome ersetzt sein.

Bevorzugt sind Dimercaprol, Porphyrine, 2,2'-Bipyridin, Phenanthrolin und Neocuproin.
Besonders bevorzugt sind 2,2'-Bipyridin, Phenanthrolin und Neocuproin.

Dabei können die Verbindungen (E) als monomer, substituiert oder an polymere Strukturen gebunden sein.

Verbindung (E) kann zu jedem Zeitpunkt eingemischt werden. Ohne den Umfang der Erfindung zu beschränken und wie bereits weiter oben bei Verbindung (D) beschrieben, ist die Theorie des Wirkprinzips eine Reaktion der Verbindung (E) mit Verunreinigungen der zugegebenen Verbindung (D). Damit sind Katalysatorverbindungen gemeint, welche als Verunreinigungen aus der Synthese der Katalysatoren (D) kommen, sowie Abbauprodukte von (D), die während der Lagerung gebildet werden. Durch diese Abfangreaktion werden Katalysatorspezies gebunden, die sonst zu einer vorzeitigen, nicht gewollten Vernetzung der Siliconzusammensetzung führen. Gemäß der bestehenden Theorie reagiert die Verbindung (D) selbst dabei nicht mit Verbindung (E). Idealerweise beeinflusst die Zugabe von Verbindung (E) auch das Vernetzungsverhalten nicht bzw. nur unwesentlich. Im Rahmen der Erfindung ist eine Verlängerung der Vernetzungsdauer bis zur 50 %igen Vernetzung bei thermischer oder photochemischer Aktivierung des Katalysators (D) um maximal 50 % akzeptabel und daher erfindungsgemäß. Die Topfzeit der reaktiven Mischung wird im Gegenzug erhöht, so dass erfindungsgemäße, einkomponentige Zusammensetzungen, welche mindestens 7 Tage bei 50 °C-Lagerung und 160 Tage bei Raumtemperaturlagerung (bei ca. 20-25°C) einen maximalen Anstieg der dynamischen Viskosität bei einer Scherrate von 10 s⁻¹ um den Faktor 2 zeigen.

Die Verbindung (E) wird üblicherweise im Unterschuss zur Verbindung (D) verwendet. Das molare Verhältnis der Verbindung (E) zur Verbindung (D) liegt dabei zwischen 0,0001 und 10, bevorzugt zwischen 0,001 und 1 und besonders bevorzugt zwischen 0,005 und 0,8.

### Weitere optionale Verbindungen (F) und (G)

Neben den oben genannten Verbindungen (A), (B), (C), (D) und (E) können noch weitere Verbindungen (F) oder (G) in den erfindungsgemäßen Siliconzusammensetzungen enthalten sein.

Verbindungen (F) wie beispielsweise Inhibitoren und Stabilisatoren dienen der gezielten Einstellung der Verarbeitungszeit, Anspringtemperatur und Vernetzungsgeschwindigkeit der erfindungsgemäßen Siliconzusammensetzungen. Diese Inhibitoren und Stabilisatoren sind auf dem Gebiet der additionsvernetzenden Zusammensetzungen sehr gut bekannt. Beispiele gebräuchlicher Inhibitoren sind acetylenische Alkohole, wie 1-Ethinyl-1-cyclohexanol, 2-Methyl-3-butin-2-ol und 3.5-Dimethyl-1-hexin-3-ol, 3-Methyl-1-dodecin-3-ol, Polymethylvinylcyclosiloxane wie 1,3,5,7-Tetravinyltetramethyltetracyclosiloxan niedermolekulare Siliconöle mit Methylvinyl-SiO_{1/2}-Gruppen und/oder R₂vinylSiO_{1/2}-Endgruppen, wobei R die oben angegebene Bedeutung hat, wie Divinyltetramethydisiloxan Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfumarat, organische Hydroperoxide wie Cumolhydroperoxid, tert-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitorzusätze (F) hängt von ihrer chemischen Struktur ab, so dass die Konzentration individuell bestimmt werden muss. Inhibitoren und Inhibitormischungen werden vorzugsweise in einem Mengenanteil von weniger als 1 % bezogen auf das Gesamtgewicht der Mischung zugesetzt, bevorzugt weniger als 0, 1% und besonders bevorzugt weniger als 0,01 %.

Verbindungen (G) sind alle weiteren Zusatzstoffe, die auch bisher zur Herstellung von additionsvernetzbaren Zusammensetzungen eingesetzt wurden.

Die erfindungsgemäße Siliconzusammensetzung kann wahlweise als Bestandteile (G) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, verstärkende und nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften Dispergierhilfsmittel, Lösungsmittel, Haftvermittler, Pigmente, Farbstoffe, Weichmacher, organische Polymere, Hitzestabilisatoren die verschieden von (F) sind usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Metallstäube, Farbstoffe, Pigmente usw.

Beispiele für verstärkende Füllstoffe, die als Verbindung (G) in den erfindungsgemäßen Siliconzusammensetzungen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind. Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich. Der Gehalt der erfindungsgemäßen vernetzbaren Zusammensetzung an aktiv verstärkendem Füllstoff (G) liegt im Bereich von 0 bis 70 Gew.-%, vorzugsweise bei 0 bis 50 Gew.-%.

Die erfindungsgemäßen Siliconzusammensetzungen können, falls erforderlich, in Flüssigkeiten gelöst, dispergiert suspendiert oder emulgiert werden. Die erfindungsgemäßen Zusammensetzungen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Zusammensetzungen der Fall sein kann. Insbesondere können die erfindungsgemäßen Zusammensetzungen, falls sie hochviskos sind, in Form eines Granulates zubereitet werden. Hierbei kann das einzelne Granulatteilchen alle Verbindungen enthalten, oder die erfindungsgemäß eingesetzten Verbindungen sind getrennt in verschiedenen Granulatteilchen eingearbeitet. Hinsichtlich der elastomeren Eigenschaften der vernetzten erfindungsgemäßen Siliconzusammensetzungen wird gleichfalls das gesamte Spektrum umfasst, beginnend bei extrem weichen Silicongelen, über gummiartige Materialien bis hin zu hochvernetzten Siliconen mit glasartigem Verhalten.

Bei den erfindungsgemäßen Siliconzusammensetzungen kann es sich um Einkomponenten-Siliconzusammensetzungen wie auch um Zweikomponenten-Siliconzusammensetzungen handeln.

Die Herstellung der erfindungsgemäßen Siliconzusammensetzungen kann nach bekannten Verfahren erfolgen, wie beispielsweise durch gleichmäßiges Vermischen der einzelnen Verbindungen zu einer einkomponentigen Zusammensetzungen (1K). Die Reihenfolge dabei ist beliebig, bevorzugt ist jedoch die gleichmäßige Vermischung des Platinkatalysators (D) mit einer Mischung aus (A), (B) gegebenenfalls (F) und (G). Der erfindungsgemäß eingesetzte Platinkatalysator (D) kann dabei als Festsubstanz oder als Lösung - in einem geeigneten Lösungsmittel gelöst - oder als sogenannter Batch - gleichmäßig mit einer geringen Menge (A) oder (A) mit (F) vermischt - eingearbeitet werden.

Die Herstellung einer zweikomponentigen Zusammensetzungen (2K) erfolgt ebenfalls durch gleichmäßiges Vermischen der einzelnen Verbindungen, mit der Maßgabe, dass weder die A-Komponente noch die B-Komponente gleichzeitig Verbindungen mit aliphatischer Mehrfachbindung, Verbindungen mit Si-gebundenem Wasserstoff und Katalysator, also im Wesentlichen nicht gleichzeitig die Bestandteile (A), (B) und (D) bzw. (C) und (D) enthält.

Vorzugsweise handelt es sich bei den erfindungsgemäßen Siliconzusammensetzungen jedoch um 1K-Siliconzusammensetzungen.

Bei den erfindungsgemäß eingesetzten Verbindungen (A) bis (G) kann es sich jeweils um eine einzelne Art einer solchen Verbindung, wie auch um ein Gemisch aus mindestens zwei verschiedenen Arten einer solchen Verbindung handeln.

Die erfindungsgemäßen, durch Anlagern von Si-gebundenem Wasserstoff an aliphatische Mehrfachbindung, vernetzbaren Siliconzusammensetzungen können unter den gleichen Bedingungen vernetzt werden, wie die bisher bekannten durch Hydrosilylierungsreaktion vernetzbaren Zusammensetzungen.

Vorzugsweise handelt es sich dabei um Temperaturen von 10 °C bis 220°C, besonders bevorzugt von 25 °C bis 150°C, und einem Druck von 900 bis 1100 hPa. Es können aber auch höhere oder niedrigere Temperaturen und Drücke angewendet werden.

Die erfindungsgemäßen Siliconzusammensetzungen sowie die erfindungsgemäß daraus hergestellten Vernetzungsprodukte können für alle Zwecke eingesetzt werden, für die auch bisher zu Elastomeren vernetzbare Organopolysiloxanzusammensetzungen bzw. Elastomere verwendet wurden. Ein weiterer Gegenstand der vorliegenden Erfindung sind daher Formkörper oder Beschichtungen hergestellt durch Vernetzung der erfindungsgemäßen Zusammensetzungen.
Dies umfasst beispielsweise die Siliconbeschichtung bzw. Imprägnierung beliebiger Substrate, die Herstellung von Formteilen, beispielsweise im Spritzgussverfahren, Vakuumextrusionsverfahren, Extrusionsverfahren Formgießen und Formpressen, und Abformungen, die Verwendung als Dicht- Einbett- und Vergussmassen usw.

Die erfindungsgemäßen vernetzbaren Siliconzusammensetzungen haben den Vorteil, dass sie in einem einfachen Verfahren unter Verwendung leicht zugänglicher Ausgangsstoffe und damit wirtschaftlich hergestellt werden können. Die erfindungsgemäßen vernetzbaren Zusammensetzungen haben den weiteren Vorteil, dass sie als einkomponentige Formulierung bei 25°C und Umgebungsdruck eine gute Lagerstabilität aufweisen und erst bei erhöhter Temperatur rasch vernetzen. Die erfindungsgemäßen Siliconzusammensetzungen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also extrem lange Topfzeit zeigen, und erst bei erhöhter Temperatur rasch vernetzt.

Bei der Herstellung der erfindungsgemäßen vernetzbaren Siliconzusammensetzungen ist es von großem Vorteil, dass sich der Edelmetallkatalysator (D) gut dosieren und leicht einarbeiten lässt.

Die erfindungsgemäßen Siliconzusammensetzungen haben des Weiteren den Vorteil, dass die daraus erhaltenen, vernetzten Siliconkautschuke eine ausgezeichnete Durchsichtigkeit/Transparenz aufweisen.

Die erfindungsgemäßen Siliconzusammensetzungen haben ferner den Vorteil, dass die Hydrosilylierungsreaktion sich nicht mit der Reaktionsdauer verlangsamt.

### Beispiele

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Im Folgenden beziehen sich alle Viskositätsangaben auf eine Temperatur von 25 °C. Die nachfolgenden Beispiele erläutern die Erfindung, ohne dabei beschränkend zu wirken. Die Angabe der Topfzeit bezieht sich auf eine Verdoppelung der dynamischen Ausgangsviskosität gemessen nach 3-minütigem Aufrühren der Probe mit Hilfe eines Flügelrührers bei einer Scherrate von 25 s⁻¹. Die Angabe der Gelierzeit nach Belichten oder bei einer bestimmten Temperatur bedeutet eine Verdoppelung der dynamischen Ausgangsviskosität gemessen bei einer Scherrate von 0,5 s⁻¹.

Es werden folgende Abkürzungen verwendet:
- Kat.: Katalysator
- Bsp.: Beispiel
- Nr.: Nummer
- GM: Grundmischung
- Konz.: Konzentration
- ppm: parts per million
- *): Vergleichsbeispiel

In den Beispielen werden verschiedene Siliconmassen als Grundmischungen (GM) für die Herstellung von 1K-Siliconzusammensetzungen verwendet. Die Inhaltsstoffe sind in Tabelle 1 angeben.

**Tabelle 1**

| | GM 1 | GM 2 | GM 3 | GM 4 | GM 5 | GM 6 | GM 7 | GM 8 | GM 9 |
|---|---|---|---|---|---|---|---|---|---|
| Verbindung A (Si-Vi) | x | x | x | x | x | x | x | x | x |
| Verbindung B (Si-H) | x | x | x | x | x | x | x | x | x |
| Verbindung C (Si-Vi, Si-H) | | | | | | x | x | | |
| Verbindung F1 | | | x | x | | x | | x | |
| Verbindung F2 | | | | | x | | x | x | x |
| Verbindung G | | | x | x | x | x | x | x | |
| SiH/Si-Vi | 1,8 | 0,7 | 2,0 | 0,7 | 2 | 1,6 | 1,6 | 1,8 | 2,0 |

Verbindung A: Bei Verbindung A handelt es sich um ein α,ω-Divinylterminiertes lineare Polydimethylsiloxan mit einer mittleren Kettenlänge von 220.
Verbindung B: Bei Verbindung B handelt es sich um einen linearen Kammvernetzer mit einer mittleren Kettenlänge von 100 Einheiten und einer S-H-Konzentration von 1,7 mmol/g.
Verbindung C: Bei Verbindung C handelt es sich um ein α,ω-Divinylterminiertes lineare Polydimethylsiloxan mit einer mittleren Kettenlänge von 220, bei dem im Mittel zwei Ketteneinheiten eine Si-H Funktion aufweisen.
Verbindung D: Diese wird erst später laut Tabelle 2 mit den verschiedenen GM kombiniert und variiert.
Verbindung F1: Pyrogene hydrophobe Kieselsäure 130 m²/g
Verbindung F2: Pyrogene hydrophobe Kieselsäure 300 m²/g
Verbindung G: (Haftvermittler, Rheologie-additive): Als Verbindung G wird exemplarisch (3-Glycidyloxypropyl)trimethoxysilane verwendet.

Die Mengenverhältnisse werden wie folgt eingestellt:
GM 1: 88 Gew% Verbindung A und 12 Gew% Verbindung B
GM 2: 95 Gew% Verbindung A und 5 Gew% Verbindung B
GM 3: 59 Gew% Verbindung A, 9 Gew% Verbindung B, 30 Gew% Verbindung F1 und 2 Gew% Verbindung G
GM 4: 64,5 Gew% Verbindung A, 3,5 Gew% Verbindung B, 30 Gew% Verbindung F1 und 2 Gew% Verbindung G
GM 5: 59 Gew% Verbindung A, 9 Gew% Verbindung B, 30 Gew% Verbindung F2 und 2 Gew% Verbindung G
GM 6: 30 Gew% Verbindung A, 3,5 Gew% Verbindung B, 34,5 Gew% Verbindung C, 30 Gew% Verbindung F1 und 2 Gew% Verbindung G
GM 7: 30 Gew% Verbindung A, 3,5 Gew% Verbindung B, 34,5 Gew% Verbindung C, 30 Gew % Verbindung F2 und 2 Gew% Verbindung G
GM 8: 60 Gew% Verbindung A, 8 Gew% Verbindung B, 15 Gew % Verbindung F1, 15 Gew% Verbindung F2 und 2 Gew% Verbindung G
GM 9: 59 Gew% Verbindung A, 9 Gew% Verbindung B und 30 Gew% Verbindung F1

Für die Herstellung stabiler einkomponentiger Siliconzusammensetzungen wird mindestens ein Edelmetallkatalysator zugesetzt. Dieser wird vor seinem Einsatz wie folgt behandelt (=Verbindung D) .

### Beispiel 1: Herstellung eines stabilen Katalysators Kat.1

In einem Kolben werden 5 g Bis(σ-tertbutylethinyl)-cyclooctadiene-Pt(II) in 50 ml Ethylacetat gelöst. Nach der Zugabe von 500 mg 2,2'-Bipyridin wird die Lösung 24 Stunden bei Raumtemperatur gerührt. Anschließend wird das Lösungsmittel bei Raumtemperatur durch Anlegen von Vakuum entfernt.

### Beispiel 2: Herstellung eines stabilen Katalysators Kat.2

In einem Kolben werden 5 g Bis(σ-tert-butylphenyl)-cyclooctadien-Pt(II) in 50 ml Ethylacetat gelöst. Nach der Zugabe von 50 mg 1,10-Phenanthrolin wird die Lösung 24 Stunden bei Raumtemperatur gerührt. Anschließend wird das Lösungsmittel bei Raumtemperatur durch Anlegen von Vakuum entfernt.

### Beispiel 3: Herstellung eines stabilen Katalysators Kat.3

In einem Kolben werden 5 g Trimethyl[(allyldimethylsilyl)cyclopentadienyl]-platin(IV) vorgelegt und 200 mg Neocuproin hinzugefügt. Anschließend wird die Suspension 24 Stunden bei Raumtemperatur gerührt.

### Beispiel 4: Herstellung eines stabilen Katalysators Kat.4

In einem Kolben werden 5 g Trimethyl[(trimethoxysilyl)propyl-(allyldimethylsilyl)cyclopentadienyl] -platin(IV) vorgelegt und 1000 mg Poly-4-vinylpyridin hinzugefügt. Anschließend wird die Suspension 24 Stunden bei Raumtemperatur gerührt. Durch Filtration über eine Glasfritte mit der Porengröße 10-16 µm (G4) wird das Poly-4-vinylpyridin vollständig entfernt.

### Beispiel 5: Herstellung eines stabilen Katalysators Kat.5

In einem Kolben werden 5 g Trimethyl[(trimethoxysilyl)methyl-(allyldimethylsilyl)cyclopentadienyl]-platin(IV) vorgelegt, wobei die Methoxygruppen in einer Vorreaktion zu mindestens 70 % durch OH-terminierte Polydimethylsiloxanpolymere mit der Kettenlänge 600 ersetzt wurden und 500 mg 1,10-Phenanthrolin zugefügt. Die Suspension wird 24 Stunden bei Raumtemperatur gerührt.

### Beispiel 6: Herstellung eines stabilen Katalysators Kat.6

In einem Kolben werden 5 g Trimethyl[(trimethoxysilyl)methyl-(allyldimethylsilyl)cyclopentadienyl]-platin(IV), wobei die Methoxygruppen in einer Vorreaktion zu mindestens 70 % durch OH-terminierte Polydimethylsiloxanpolymere mit der Kettenlänge 600 ersetzt wurden, vorgelegt und 5 g Kieselgel 60 (0,063-0,200 mm, CAS 7631-86-9), bei dem in einer Vorreaktion 5 Gewichtsprozent 1,10-Phenanthrolin kovalent an der Oberfläche angebunden wurden, zugefügt. Die Suspension wird 24 Stunden bei Raumtemperatur gerührt. Durch Filtration über eine Glasfritte mit der Porengröße 10-16 µm (G4) wird das mit 1,10-Phenanthrolin belegte Kieselgel vollständig entfernt.

### Beispiel 7: Herstellung eines stabilen Katalysators Kat.7

In einem Kolben werden 5 g Trimethyl[(3-dimethoxymethylsilyl)propyl-(tert-butyl) cyclopentadienyl]-platin(IV), wobei die Methoxygruppen in einer Vorreaktion zu mindestens 70 % durch OH-terminierte Polydimethylsiloxanpolymere mit der Kettenlänge 200 ersetzt wurden, vorgelegt und 500 mg Neocuproin zugefügt. Die Suspension wird 24 Stunden bei Raumtemperatur gerührt.

### Beispiel 8: Herstellung eines stabilen Katalysators Kat.8

In einem Kolben werden 5 g Trimethyl[(3-dimethoxymethylsilyl)propyl-cyclopentadienyl]-platin(IV), wobei die Methoxygruppen in einer Vorreaktion zu mindestens 70 % durch OH-terminierte Polydimethylsiloxanpolymere mit der Kettenlänge 600 ersetzt wurden, vorgelegt und 300 mg Dimercaprol zugefügt. Die Mischung wird 24 Stunden bei Raumtemperatur gerührt.

### Beispiel 9: Herstellung eines stabilen Katalysators Kat.9

In einem Kolben werden 5 g Bis(acetylacetonato)Pt(II) in 50 ml Ethylacetat gelöst und 5 g Kieselgel 60 (0,063-0,200 mm, CAS 7631-86-9), bei dem in einer Vorreaktion 5 Gewichtsprozent 2,2'-Bipyridin kovalent an der Oberfläche angebunden wurden, zugefügt. Nach 24-stündigem Rühren bei Raumtemperatur wird das belegte Kieselgel über eine Glasfritte mit der Porengröße 10-16 µm (G4) vollständig entfernt.

### Beispiel 10: Kat.10

Bis(σ-tertbutylethinyl)-cyclooctadiene-Pt(II)

### Beispiel 11: Kat.11

Bis(σ-tert-butylphenyl)-cyclooctadien-Pt(II)

### Beispiel 12: Kat.12

Trimethyl[(allyldimethylsilyl)cyclopentadienyl]-platin(IV)

### Beispiel 13: Kat.13

Trimethyl[(trimethoxysilyl)propyl-(allyldimethylsilyl)cyclopentadienyl]-platin(IV)

### Beispiel 14: Kat.14

Trimethyl[(trimethoxysilyl)methyl-(allyldimethylsilyl)cyclopentadienyl]-platin(IV) wird vorgelegt, wobei die Methoxygruppen in einer Vorreaktion zu mindestens 70 % durch OH-terminierte Polydimethylsiloxanpolymere mit der Kettenlänge 600 ersetzt wurden.

### Beispiel 15: Kat.15

Trimethyl[(trimethoxysilyl)methyl-(allyldimethylsilyl)cyclopentadienyl]-platin(IV), wobei die Methoxygruppen in einer Vorreaktion zu mindestens 70 % durch OH-terminierte Polydimethylsiloxanpolymere mit der Kettenlänge 600 ersetzt wurden.

### Beispiel 16: Kat.16

Trimethyl[(3-dimethoxymethylsilyl)propyl-(tert-butyl) cyclopentadienyl]-platin(IV), wobei die Methoxygruppen in einer Vorreaktion zu mindestens 70 % durch OH-terminierte Polydimethylsiloxanpolymere mit der Kettenlänge 200 ersetzt wurden.

### Beispiel 17: Kat.17

Trimethyl[(3-dimethoxymethylsilyl)propyl-cyclopentadienyl]-platin(IV), wobei die Methoxygruppen in einer Vorreaktion zu mindestens 70 % durch OH-terminierte Polydimethylsiloxanpolymere mit der Kettenlänge 600 ersetzt wurden.

### Beispiel 18: Kat.18

Bis(acetylacetonato) Pt(II)

### Beispiel 19: 1,3-divinyl-1,1',3,3'-tetramethyldisiloxan (Karstedt-Katalysator)

Die Tabelle 2 zeigt die Kombinationen aus Grundmischungen mit Katalysatoren, aus denen die vernetzbaren Zusammensetzungen hergestellt wurden sowie die Ergebnisse der Lagerversuche. Die Konzentrationsangabe des Platinkatalysators wird berechnet auf das Metall, wie in der Literatur üblich. Vergleichsbeispiele (="*)") zeigen das Verhalten der unstabilisierten, nicht erfinderischen Zusammensetzungen. In den Beispielen 37 bis 45 wurden die beim Katalysator angegebenen Verbindungen verwendet, jedoch wurde der stabilisierend wirkende Chelatligand nicht zum Katalysator, sondern am Ende des Compoundierprozesses zur Siliconformulierung gegeben (="**)").

Es wird deutlich, dass es wichtig ist, die Scavenger-Wirkung entweder auf der Stufe des Platinkatalysators oder in der Mischung durchzuführen. Dabei ist es unwichtig, ob die stabilisierende Verbindung in der vernetzbaren Mischung verbleibt oder wieder daraus entfernt wird, beispielsweise durch die Verwendung festphasengebundener Liganden, welche durch Filtration entfernt werden können.

**Tabelle 2**

| Beispiel Nr. | GM Nr. | Kat.Nr. | Pt-Konz. [ppm] | Topfzeit 50 °C [Tage] | Topfzeit 23 °C [Tage] |
|---|---|---|---|---|---|
| 20 | 1 | 1 | 10 | 29 | > 250 |
| 21 | 1 | 2 | 10 | 28 | > 250 |
| 22 | 1 | 3 | 30 | 38 | > 250 |
| 23 | 1 | 4 | 30 | 31 | > 250 |
| 24 | 1 | 5 | 30 | 47 | > 250 |
| 25 | 1 | 6 | 30 | 42 | > 250 |
| 26 | 1 | 7 | 30 | 50 | > 250 |
| 27 | 1 | 8 | 30 | 45 | > 250 |
| 28 | 1 | 9 | 30 | 18 | > 250 |
| 29 *) | 1 | 10 | 10 | < 3 | 5 |
| 30 *) | 1 | 11 | 10 | < 3 | 6 |
| 31 *) | 1 | 12 | 30 | < 3 | 4 |
| 32 *) | 1 | 13 | 30 | < 3 | 4 |
| 33 *) | 1 | 14 | 30 | < 3 | 4 |
| 34 *) | 1 | 15 | 30 | < 3 | 3 |
| 35 *) | 1 | 16 | 30 | < 3 | 4 |
| 36 *) | 1 | 17 | 30 | < 3 | 3 |
| 37 *) | 1 | 18 | 30 | < 3 | 4 |
| 38 | 1 | 10 **) | 10 | 25 | > 250 |
| 39 | 1 | 11 **) | 10 | 25 | > 250 |
| 40 | 1 | 12 **) | 30 | 35 | > 250 |
| 41 | 1 | 13 **) | 30 | 28 | > 250 |
| 42 | 1 | 14 **) | 30 | 40 | > 250 |
| 43 | 1 | 15 **) | 30 | 40 | > 250 |
| 44 | 1 | 16 **) | 30 | 44 | > 250 |
| 45 | 1 | 17 **) | 30 | 42 | > 250 |
| 46 | 1 | 18 **) | 30 | 14 | > 250 |
| 47 | 2 | 1 | 8 | 35 | > 250 |
| 48 | 2 | 2 | 8 | 32 | > 250 |
| 49 | 2 | 3 | 30 | 36 | > 250 |
| 50 | 2 | 4 | 30 | 32 | > 250 |
| 51 | 2 | 5 | 30 | 45 | > 250 |
| 52 | 2 | 6 | 30 | 43 | > 250 |
| 53 | 2 | 7 | 30 | 53 | > 250 |
| 54 | 2 | 8 | 30 | 50 | > 250 |
| 55 | 2 | 9 | 30 | 21 | > 250 |
| 56 | 3 | 1 | 10 | 24 | > 250 |
| 57 | 3 | 2 | 10 | 22 | > 250 |
| 58 | 3 | 3 | 30 | 31 | > 250 |
| 59 | 3 | 4 | 30 | 28 | > 250 |
| 60 | 3 | 5 | 30 | 44 | > 250 |
| 61 | 3 | 6 | 30 | 42 | > 250 |
| 62 | 3 | 7 | 30 | 48 | > 250 |
| 63 | 3 | 8 | 30 | 48 | > 250 |
| 64 | 3 | 9 | 30 | 16 | 180 |
| 65 | 4 | 1 | 10 | 23 | > 250 |
| 66 | 4 | 2 | 10 | 24 | > 250 |
| 67 | 4 | 3 | 30 | 30 | > 250 |
| 68 | 4 | 4 | 30 | 29 | > 250 |
| 69 | 4 | 5 | 30 | 43 | > 250 |
| 70 | 4 | 6 | 30 | 43 | > 250 |
| 71 | 4 | 7 | 30 | 47 | > 250 |
| 72 | 4 | 8 | 30 | 46 | > 250 |
| 73 | 4 | 9 | 30 | 15 | 200 |
| 74 | 5 | 1 | 10 | 27 | > 250 |
| 75 | 5 | 2 | 10 | 26 | > 250 |
| 76 | 5 | 3 | 30 | 29 | > 250 |
| 77 | 5 | 4 | 30 | 31 | > 250 |
| 78 | 5 | 5 | 30 | 42 | > 250 |
| 79 | 5 | 6 | 30 | 44 | > 250 |
| 80 | 5 | 7 | 30 | 48 | > 250 |
| 81 | 5 | 8 | 30 | 45 | > 250 |
| 82 | 5 | 9 | 30 | 15 | 200 |
| 83 | 6 | 1 | 10 | 27 | > 250 |
| 84 | 6 | 2 | 10 | 25 | > 250 |
| 85 | 6 | 3 | 30 | 28 | > 250 |
| 86 | 6 | 4 | 30 | 41 | > 250 |
| 87 | 6 | 5 | 30 | 40 | > 250 |
| 88 | 6 | 6 | 30 | 43 | > 250 |
| 89 | 6 | 7 | 30 | 50 | > 250 |
| 90 | 6 | 8 | 30 | 51 | > 250 |
| 91 | 6 | 9 | 30 | 15 | 190 |
| 92 | 7 | 1 | 10 | 26 | > 250 |
| 93 | 7 | 2 | 10 | 26 | > 250 |
| 94 | 7 | 3 | 30 | 27 | > 250 |
| 95 | 7 | 4 | 30 | 39 | > 250 |
| 96 | 7 | 5 | 30 | 38 | > 250 |
| 97 | 7 | 6 | 30 | 42 | > 250 |
| 98 | 7 | 7 | 30 | 53 | > 250 |
| 99 | 7 | 8 | 30 | 52 | > 250 |
| 100 | 7 | 9 | 30 | 15 | 190 |
| 101 | 8 | 1 | 10 | 28 | > 250 |
| 102 | 8 | 2 | 10 | 26 | > 250 |
| 103 | 8 | 3 | 30 | 28 | > 250 |
| 104 | 8 | 4 | 30 | 43 | > 250 |
| 105 | 8 | 5 | 30 | 42 | > 250 |
| 106 | 8 | 6 | 30 | 41 | > 250 |
| 107 | 8 | 7 | 30 | 49 | > 250 |
| 108 | 8 | 8 | 30 | 53 | > 250 |
| 109 | 8 | 9 | 30 | 15 | 200 |
| 110 | 9 | 1 | 10 | 36 | > 250 |
| 111 | 9 | 2 | 10 | 34 | > 250 |
| 112 | 9 | 3 | 30 | 36 | > 250 |
| 113 | 9 | 4 | 30 | 53 | > 250 |
| 114 | 9 | 5 | 30 | 52 | > 250 |
| 115 | 9 | 6 | 30 | 52 | > 250 |
| 116 | 9 | 7 | 30 | 53 | > 250 |
| 117 | 9 | 8 | 30 | 53 | > 250 |
| 118 | 9 | 9 | 30 | 25 | > 250 |
| 119 | 1 | 19 | 10 | - | < 1 |

In Tabelle 3 wird die Aktivität der stabilisierten Mischungen mit unstabilisierten Vergleichsbeispielen *) exemplarisch unter Verwendung der Grundmischung 1 verglichen. Überraschenderweise wurde gefunden, dass die verwendete Art der zweizähnigen Liganden zu keiner signifikanten Verlängerung der Gelierzeit führt. Die Angabe der Gelierzeit nach Belichten oder bei einer bestimmten Temperatur bedeutet eine Verdoppelung der dynamischen Ausgangsviskosität gemessen bei einer Scherrate von 0,5 s⁻¹. Die Aktivierung der Vernetzungsreaktion erfolgt bei den Beispielen 118, 119, 127 und 128 thermisch durch eine Temperaturerhöhung auf 150 °C, bei den Beispielen 120 bis 126 und 129 bis 135 erfolgt die Aktivierung durch eine 10 s Belichtung in einem UV-Cube der Fa. Höhnle in einem Abstand zur Lichtquelle, dass die Strahlungsintensität am Ort der Probe ca.70 mW/cm2 beträgt. Nach der Bestrahlung wird die Probe in ein Rheometer der Fa. Anton Paar überführt und die Viskosität bestimmt. Die Zeitangabe ist gemessen ab dem Ende der 10s-Bestrahlungsdauer.

**Tabelle 3**

| Beispiel Nr. | GM Nr. | Kat.Nr. | Pt-Konz. [ppm] | Gelierzeit [s] | Topfzeit 23 °C [Tage] |
|---|---|---|---|---|---|
| 119 *) | 1 | 10 | 10 | 35 | 5 |
| 120 *) | 1 | 11 | 10 | 36 | 6 |
| 121 *) | 1 | 12 | 30 | 20 | 4 |
| 122 *) | 1 | 13 | 30 | 20 | 4 |
| 123 *) | 1 | 14 | 30 | 22 | 4 |
| 124 *) | 1 | 15 | 30 | 23 | 3 |
| 125 *) | 1 | 16 | 30 | 20 | 4 |
| 126 *) | 1 | 17 | 30 | 20 | 3 |
| 127 *) | 1 | 18 | 30 | 70 | 4 |
| 128 | 1 | 1 | 10 | 34 | > 250 |
| 129 | 1 | 2 | 10 | 36 | > 250 |
| 130 | 1 | 3 | 30 | 22 | > 250 |
| 131 | 1 | 4 | 30 | 23 | > 250 |
| 132 | 1 | 5 | 30 | 21 | > 250 |
| 133 | 1 | 6 | 30 | 22 | > 250 |
| 134 | 1 | 7 | 30 | 23 | > 250 |
| 135 | 1 | 8 | 30 | 45 | > 250 |
| 136 | 1 | 9 | 30 | 73 | > 250 |

## Patentansprüche

1. Additionsvernetzende Siliconzusammensetzungen, ausgewählt aus der Gruppe enthaltend
- jeweils mindestens eine Verbindung (A), (B), (D) und (E),
- jeweils mindestens eine Verbindung (C), (D), und (E) und
- jeweils mindestens eine Verbindung (A), (B), (C), (D) und (E)
wobei
(A) eine organische Verbindung oder eine Siliziumorganische Verbindung, enthaltend mindestens zwei Reste mit aliphatischen Kohlenstoff-Kohlenstoff-Mehrfachbindungen,
(B) ein Siliziumorganische Verbindung, enthaltend mindestens zwei Si-gebundene Wasserstoffatome,
(C) eine Siliziumorganische Verbindung, enthaltend SiC-gebundene Reste mit aliphatischen Kohlenstoff-Kohlenstoff-Mehrfachbindungen und Si- gebundene Wasserstoffatome,
(D) ein Edelmetallkatalysator, wobei das Edelmetall in einer Oxidationsstufe von größer 0 vorliegt, und
(E) einen mindestens zweizähnigen Chelatliganden bedeutet,
mit der Maßgabe, dass die Verbindung (D) und (E) vorab gemischt wurden, oder die Verbindung (E) gleichzeitig mit Verbindung (D) in die Zusammensetzung eingemischt wird, und
mit der Maßgabe, dass die Verbindung (E) in der Siliconzusammensetzung verbleibt.

2. Additionsvernetzende Siliconzusammensetzungen, ausgewählt aus der Gruppe enthaltend
- jeweils mindestens eine Verbindung (A), (B), (D) und (E),
- jeweils mindestens eine Verbindung (C), (D), und (E) und
- jeweils mindestens eine Verbindung (A), (B), (C), (D) und (E)
wobei
(A) eine organische Verbindung oder eine Siliziumorganische Verbindung, enthaltend mindestens zwei Reste mit aliphatischen Kohlenstoff-Kohlenstoff-Mehrfachbindungen,
(B) ein Siliziumorganische Verbindung, enthaltend mindestens zwei Si-gebundene Wasserstoffatome,
(C) eine Siliziumorganische Verbindung, enthaltend SiC-gebundene Reste mit aliphatischen Kohlenstoff-Kohlenstoff-Mehrfachbindungen und Si- gebundene Wasserstoffatome,
(D) ein Edelmetallkatalysator, wobei das Edelmetall in einer Oxidationsstufe von größer 0 vorliegt, und
(E) einen mindestens zweizähnigen Chelatliganden bedeutet,
mit der Maßgabe, dass die Verbindung (D) und (E) vorab gemischt wurden, und
mit der Maßgabe, dass die Verbindung (E) nach der Behandlung und vor dem Vermischen mit den anderen Verbindungen wieder entfernt wurde.

3. Additionsvernetzende Siliconzusammensetzungen gemäß Anspruch 1 oder 2, **dadurch gekennzeichnet, dass** (D) ein Pt- oder Pd-Katalysator ist und Pt und Pd in den Oxidationsstufen +II oder +IV vorliegen.

4. Additionsvernetzende Siliconzusammensetzungen gemäß Anspruch 1 oder 2, **dadurch gekennzeichnet, dass** (D) ein Ir- oder Rh-Katalysator ist und Ir und Rh in den Oxidationsstufen +I oder +III vorliegt.

5. Additionsvernetzende Siliconzusammensetzungen gemäß einem der Ansprüche 1 bis 4, **dadurch gekennzeichnet, dass** das molare Verhältnis der Verbindung (E) zur Verbindung (D) zwischen 0,0001 und 10 liegt.

6. Herstellung der additionsvernetzenden Siliconzusammensetzungen, gemäß einem der Ansprüche 1 bis 5, durch gleichmäßiges Vermischen der einzelnen Verbindungen zu einer einkomponentigen Zusammensetzungen (1K).

7. Herstellung der additionsvernetzenden Siliconzusammensetzungen, gemäß einem der Ansprüche 1 bis 5, durch gleichmäßiges Vermischen der einzelnen Verbindungen zu einer zweikomponentigen Zusammensetzung (2K), mit der Maßgabe, dass weder die A-Komponente noch die B-Komponente gleichzeitig Verbindungen mit aliphatischer Mehrfachbindung, Verbindungen mit Si-gebundenem Wasserstoff und Katalysator enthält.

8. Formkörper oder Beschichtungen hergestellt durch Vernetzung der additionsvernetzenden Siliconzusammensetzungen gemäß einem der Ansprüche 1 bis 5.

## Claims

1. Addition-crosslinking silicone compositions selected from the group comprising
- in each case at least one compound (A), (B), (D) and (E),
- in each case at least one compound (C), (D), and (E) and
- in each case at least one compound (A), (B), (C), (D) and (E)
wherein
(A) is an organic compound or an organosilicon compound comprising at least two radicals having aliphatic carbon-carbon multiple bonds,
(B) is an organosilicon compound comprising at least two Si-bonded hydrogen atoms,
(C) is an organosilicon compound comprising SiC-bonded radicals having aliphatic carbon-carbon multiple bonds and Si-bonded hydrogen atoms,
(D) is a noble metal catalyst, wherein the noble metal is in an oxidation stage of greater than 0, and
(E) is an at least bidentate chelate ligand,
with the proviso that the compound (D) and (E) have been pre-mixed, or the compound (E) is mixed into the composition simultaneously with compound (D), and with the proviso that the compound (E) remains in the silicone composition.

2. Addition-crosslinking silicone compositions selected from the group comprising
- in each case at least one compound (A), (B), (D) and (E),
- in each case at least one compound (C), (D) and (E) and
- in each case at least one compound (A), (B), (C), (D) and (E)
wherein
(A) is an organic compound or an organosilicon compound comprising at least two radicals having aliphatic carbon-carbon multiple bonds,
(B) is an organosilicon compound comprising at least two Si-bonded hydrogen atoms,
(C) is an organosilicon compound comprising SiC-bonded radicals having aliphatic carbon-carbon multiple bonds and Si-bonded hydrogen atoms,
(D) is a noble metal catalyst, wherein the noble metal is in an oxidation state of greater than 0, and
(E) is an at least bidentate chelate ligand,
with the proviso that the compound (D) and (E) have been pre-mixed, and
with the proviso that the compound (E), after treatment and prior to mixing with the other compounds, has been removed.

3. Addition-crosslinking silicone compositions according to Claim 1 or 2, **characterized in that** (D) is a Pt or Pd catalyst and Pt and Pd are in the +II or +IV oxidation states.

4. Addition-crosslinking silicone compositions according to Claim 1 or 2, **characterized in that** (D) is an Ir or Rh catalyst and Ir and Rh are in the +I or +III oxidation states.

5. Addition-crosslinking silicone compositions according to any of Claims 1 to 4, **characterized in that** the molar ratio of the compound (E) to the compound (D) is between 0.0001 and 10.

6. Preparation of the addition-crosslinking silicone compositions according to any of Claims 1 to 5 by uniformly mixing the individual compounds to give a one-component composition (1K).

7. Preparation of the addition-crosslinking silicone compositions according to any of Claims 1 to 5 by uniformly mixing the individual compounds to give a two-component composition (2K), with the proviso that neither the A component nor the B component comprises compounds at the same time having aliphatic multiple bonds, compounds having Si-bonded hydrogen and catalyst.

8. Mouldings or coatings produced by crosslinking the addition-crosslinking silicone compositions according to any of Claims 1 to 5.

## Revendications

1. Compositions de silicone réticulant par addition, choisies dans le groupe contenant
- à chaque fois au moins un composé (A), (B), (D) et (E),
- à chaque fois au moins un composé (C), (D) et (E) et
- à chaque fois au moins un composé (A), (B), (C), (D) et (E),
(A) signifiant un composé organique ou un composé organosilicié, contenant au moins deux radicaux présentant des liaisons carbone-carbone aliphatiques multiples,
(B) signifiant un composé organosilicié, contenant au moins deux atomes d'hydrogène liés par Si,
(C) signifiant un composé organosilicié, contenant des radicaux liés par SiC, présentant des liaisons carbone-carbone aliphatiques multiples et des atomes d'hydrogène liés par Si,
(D) signifiant un catalyseur de métal noble, le métal noble se trouvant dans un étage d'oxydation supérieur à 0 et
(E) signifiant au moins un ligand bidentate de chélate
sous réserve que les composés (D) et (E) ont été mélangés au préalable ou que le composé (E) est mélangé simultanément avec le composé (D) dans la composition et sous réserve que le composé (E) reste dans la composition de silicone.

2. Compositions de silicone réticulant par addition, choisies dans le groupe contenant
- à chaque fois au moins un composé (A), (B), (D) et (E),
- à chaque fois au moins un composé (C), (D) et (E) et
- à chaque fois au moins un composé (A), (B), (C), (D) et (E),
(A) signifiant un composé organique ou un composé organosilicié, contenant au moins deux radicaux présentant des liaisons carbone-carbone aliphatiques multiples,
(B) signifiant un composé organosilicié, contenant au moins deux atomes d'hydrogène liés par Si,
(C) signifiant un composé organosilicié, contenant des radicaux liés par SiC, présentant des liaisons carbone-carbone aliphatiques multiples et des atomes d'hydrogène liés par Si,
(D) signifiant un catalyseur de métal noble, le métal noble se trouvant dans un étage d'oxydation supérieur à 0 et
(E) signifiant au moins un ligand bidentate de chélate
sous réserve que les composés (D) et (E) ont été mélangés au préalable et
sous réserve que le composé (E) est de nouveau enlevé après le traitement et avant le mélange avec les autres composés.

3. Compositions de silicone réticulant par addition selon la revendication 1 ou 2, **caractérisées en ce que** (D) est un catalyseur à base de Pt ou de Pd et Pt et Pd se trouvent dans les étages d'oxydation +II ou +IV.

4. Compositions de silicone réticulant par addition selon la revendication 1 ou 2, **caractérisées en ce que** (D) est un catalyseur à base d'Ir ou de Rh et Ir et Rh se trouvent dans l'étage d'oxydation +I ou +III.

5. Compositions de silicone réticulant par addition selon l'une quelconque des revendications 1 à 4, **caractérisées en ce que** le rapport molaire du composé (E) au composé (D) se situe entre 0,0001 et 10.

6. Procédé pour la préparation des compositions de silicone réticulant par addition selon l'une quelconque des revendications 1 à 5, par mélange uniforme des différents composés en une composition à un seul composant (1C).

7. Préparation des compositions de silicone réticulant par addition selon l'une quelconque des revendications 1 à 5 par mélange uniforme des différents composés en une composition à deux composants (2C), sous réserve que ni le composant A ni le composant B ne contiennent simultanément des composés présentant une liaison aliphatique multiple, des composés présentant de l'hydrogène lié par Si et un catalyseur.

8. Corps façonnés ou revêtements, préparés par réticulation des compositions de silicone réticulant par addition selon l'une quelconque des revendications 1 à 5.
